# DEMANDE DE BREVET EUROPEEN

(11) **EP 1 559 609 A1**
(43) Date de publication de la demande: **03.08.2005**
(21) Numéro de dépôt: 05290011.5
(22) Date de dépôt: 04.01.2005
(51) Int. Cl.: B60K 35/00

(54) **Dispositif d'affichage pour véhicule automobile**

(30) Priorité: 27.01.2004 FR 0400767
(71) Demandeur: Peugeot Citroen Automobiles S.A., 78140 Vélizy Villacoublay (FR)
(72) Inventeur: Bailleux, François, 91400 Val d'Albian (FR)
(74) Mandataire: Habasque, Etienne Joel Jean-François

(57) **Abrégé**

L'invention concerne un dispositif d'affichage (12) pour véhicule automobile, du type comprenant un logement (14) contenu dans un élément (10), notamment une planche de bord, du véhicule, et un écran d'affichage (16) déplaçable entre une position active dans laquelle sa face d'affichage (18) est visible complètement et une position escamotée dans le logement dans laquelle ladite face d'affichage (18) n'est pas visible directement.

Ce dispositif comprend une ouverture d'affichage (24) formée dans une paroi dudit élément (10) pour visualiser une partie prédéterminée (33) de l'écran lorsque celui-ci est dans la position escamotée, et des moyens de renvoi (34) agencés pour renvoyer l'image de ladite partie prédéterminée de l'écran vers l'ouverture d'affichage (24) lorsque l'écran est dans sa position escamotée.

## Description

La présente invention concerne un dispositif d'affichage pour véhicule automobile, du type comprenant un logement contenu dans un élément, notamment une planche de bord, du véhicule, et un écran d'affichage déplaçable entre une position active dans laquelle sa face d'affichage est visible complètement et une position escamotée dans le logement dans laquelle ladite face d'affichage n'est pas visible directement.

Certaines fonctionnalités utilisées dans un véhicule, par exemple l'aide à la navigation par le positionnement global par satellites ou le multimédia, nécessitent l'utilisation d'un écran de grande taille incorporé au tableau de bord du véhicule pour permettre un affichage satisfaisant des informations générées par ces fonctionnalités.

Il est connu des dispositifs d'affichage qui comprennent un écran d'affichage pouvant se déplacer par translation dans un espace de rangement formé dans la planche de bord du véhicule. De tels dispositifs permettent un mode d'affichage complet de l'écran lorsque celui-ci est hors l'espace de rangement pour l'affichage des informations nécessitant une grande surface d'affichage et un mode d'affichage d'une partie supérieure de l'écran lorsque celui-ci est partiellement escamoté dans l'espace de rangement pour l'affichage d'informations se satisfaisant d'une surface plus faible.

Toutefois, la mise en oeuvre de la translation de l'écran implique le plus souvent une mécanique compliquée et une connectique peu fiable. La mécanique présente du jeu, de sorte que l'écran est soumis à des vibrations importantes qui rendent son utilisation peu agréable, et les connexions électriques sont généralement soumises à de fortes contraintes de tension qui les fragilisent et peuvent ainsi les conduire à une rupture.

Le but de l'invention est de résoudre le problème susmentionné en proposant un dispositif d'affichage pour véhicule automobile mécaniquement simple et fiable au niveau des connexions électriques et qui comprend deux modes d'affichage.

A cet effet, l'invention a pour objet un dispositif d'affichage pour véhicule automobile, du type précité caractérisé en ce qu'il comprend :
- une ouverture d'affichage formée dans une paroi dudit élément pour visualiser une partie prédéterminée de l'écran lorsque celui-ci est dans la position escamotée ; et
- des moyens de renvoi agencés pour renvoyer l'image de ladite partie prédéterminée de l'écran vers l'ouverture d'affichage lorsque l'écran est dans sa position escamotée.

Selon une autre caractéristique, le dispositif d'affichage est caractérisé en ce que l'écran est articulé au logement par des moyens d'articulation et déplaçable par rotation autour de ceux-ci.

Selon une autre caractéristique, le dispositif d'affichage est caractérisé en ce que les moyens de renvoi comprennent un système optique de renvoi, notamment un élément réfléchissant tel qu'un miroir plan, concave ou convexe.

Selon une autre caractéristique, le dispositif d'affichage est caractérisé en ce qu'il comprend en outre, entre l'écran et l'élément réfléchissant, des moyens de délimitation de la partie prédéterminée de l'écran lorsque l'écran est dans la position escamotée.

Selon une autre caractéristique, le dispositif d'affichage est caractérisé en ce qu'il est prévu une fenêtre de visualisation recouvrant l'ouverture d'affichage au moins lorsque l'écran est dans la position escamotée.

Selon une autre caractéristique, le dispositif d'affichage est caractérisé en ce l'élément réfléchissant est disposé dans un passage formé à l'intérieur dudit élément, les moyens de délimitation étant formés par une ouverture d'entrée du passage de dimensions sensiblement égales à la partie prédéterminée de l'écran et agencée en vis-à-vis de et de manière adjacente à celle-ci lorsque l'écran est dans la position escamotée.

Selon une autre caractéristique, le dispositif d'affichage est caractérisé en ce qu'il comprend un obturateur relié à l'écran, adapté pour fermer l'ouverture d'entrée du passage lorsque l'écran est dans la position active et dégager cette ouverture lorsque l'écran est dans la position escamotée, l'obturateur comprenant notamment un coulisseau relié à l'écran par un système bielle-manivelle.

Selon une autre caractéristique, le dispositif d'affichage est caractérisé en ce que le passage est ménagé de façon fixe dans ledit élément.

Selon une autre caractéristique, le dispositif d'affichage est caractérisé en ce que le passage et la fenêtre de visualisation forment un boîtier rigide, et en ce que le boîtier est mobile avec ses mouvements liés à ceux de l'écran.

Selon une autre caractéristique, le dispositif d'affichage est caractérisé en ce que le boîtier est articulé au logement et à l'écran par un ensemble d'au moins une paire de tiges sensiblement parallèles et de longueur sensiblement égales, agencées de façon que lorsque l'écran effectue une rotation de sa position active à sa position escamotée, le boîtier effectue un mouvement de quasi-translation circulaire d'une position escamotée dans le logement à une position dans laquelle sa fenêtre de visualisation recouvre l'ouverture d'affichage et l'ouverture d'entrée est en vis-à-vis et adjacente à ladite partie prédéterminée de l'écran.

Selon une autre caractéristique, le dispositif d'affichage est caractérisé en ce qu'il est prévu des moyens d'escamotage des moyens de renvoi et de la fenêtre de visualisation propres à escamoter ceux-ci dans le logement lorsque l'écran est dans sa position active.

Selon une autre caractéristique, le dispositif d'affichage est caractérisé en ce que les moyens de renvoi et la fenêtre de visualisation sont chacun articulés au logement par un bord par des moyens d'articulation et reliés chacun à l'écran par une tringlerie agencée de façon que lorsque l'écran effectue une rotation de sa position escamotée à sa position active, les moyens de renvoi et la fenêtre de visualisation effectuent un mouvement d'escamotage par rotation autour des moyens d'articulation.

Selon une autre caractéristique, le dispositif d'affichage est caractérisé en ce qu'il comprend en outre des moyens de détermination de la position de l'écran et des moyens de commande d'affichage raccordés auxdits moyens de détermination et adaptés pour inverser l'affichage de l'écran lorsque celui-ci est dans sa position escamotée.

La présente invention sera mieux comprise à la lecture de la description qui va suivre, donnée uniquement à titre d'exemple, et faite en relation avec les dessins annexés dans lesquels des références identiques concernent des éléments identiques ou analogues, et dans lesquels :
- la figure 1 est une vue en coupe longitudinale d'un premier mode de réalisation du dispositif selon l'invention ;
- la figure 2 est une vue en coupe analogue d'une variante du premier mode de réalisation, avec l'écran en position escamotée;
- la figure 3 est une vue analogue à la figure 2, avec l'écran en position active ;
- la figure 4 est une vue analogue à la figure 1 d'un deuxième mode de réalisation du dispositif selon l'invention, avec l'écran en position active ;
- la figure 5 est une vue analogue à la figure 4, avec l'écran en position escamotée ;
- la figure 6 est une vue analogue à la figure 1 d'un troisième mode de réalisation du dispositif selon l'invention, avec l'écran en position active ; et
- la figure 7 est une vue analogue à la figure 6, avec l'écran en position escamotée.

Dans ce qui suit, les expressions « supérieur », « inférieur », « longitudinal », « transversal », « avant » et « arrière » s'entendent par rapport à l'orientation du véhicule.

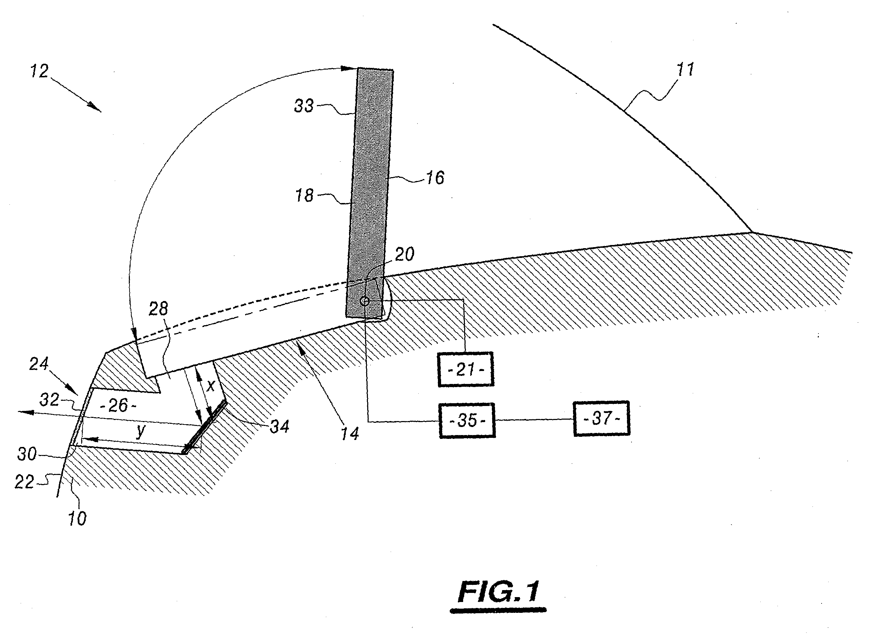

Sur la figure 1, il est représenté sous la référence générale 10 une planche de bord de véhicule automobile raccordée au pare-brise 11 du véhicule et équipée d'un dispositif d'affichage 12 selon l'invention. Le dispositif d'affichage 12 comprend un logement 14 agencé à l'intérieur de la partie supérieure de la planche de bord 10, et un écran 16 muni d'une face d'affichage 18, préférentiellement un écran du type TFT, escamotable par basculement dans le logement 14.

L'écran 16 est articulé par son bord inférieur à l'avant du logement 14 par un arbre transversal 20 fixé à l'écran. Cet arbre est entraîné en rotation par un moteur 21 entre une position active dans laquelle sa face d'affichage 18 est complètement visible par un utilisateur du véhicule, et une position escamotée dans le logement 14, représentée en trait mixte, dans laquelle sa face d'affichage 18 n'est pas directement visible par l'utilisateur.

Le dispositif 12 comprend en outre une ouverture d'affichage 24 et un passage 26. L'ouverture 24 est prévue sur une paroi arrière 22 de la planche de bord 10 en vis-à-vis de l'utilisateur, lorsque celui-ci est par exemple assis sur le siège conducteur ou passager.

Le passage 26 part du fond de la partie arrière du logement 14. II présente une section longitudinale coudée, avec une ouverture d'entrée ou de délimitation 28 et une ouverture de sortie 30 dans laquelle est insérée une fenêtre de visualisation 32, par exemple constituée de verre ou d'un matériau en plastique translucide. L'ouverture de sortie 30 est contiguë à l'ouverture d'affichage 24 de la planche de bord, de sorte que la fenêtre de visualisation 32 recouvre l'ouverture d'affichage 24.

Lorsque l'écran 18 est dans la position escamotée dans le logement 14, une partie prédéterminée 33 de celui-ci est disposée en vis-à-vis de et de façon adjacente à l'ouverture d'entrée 28, de sorte que seule la lumière émise par cette partie prédéterminée de l'écran entre à l'intérieur du passage 26.

Dans le coude du passage 26, il est prévu un miroir 34, propre à renvoyer la lumière émise par la partie prédéterminée 33 de l'écran vers la fenêtre de visualisation 32 afin d'y former l'image de la partie prédéterminée 33 de l'écran et rendre ainsi visible par l'utilisateur les informations affichées sur cette partie prédéterminée 33.

La distance x entre le miroir et l'écran, la distance y entre le miroir et la fenêtre de visualisation 32, l'inclinaison du miroir, et les dimensions de l'ouverture d'affichage 24, du miroir 34 et de la fenêtre de visualisation 32, sont choisies pour obtenir une visibilité satisfaisante de cette fenêtre entre la place conducteur et la place passager du véhicule, et un faible encombrement de l'évidement 14, 26 dans la planche de bord, et pour que l'image formée sur la fenêtre de visualisation 32 occupe essentiellement toute la surface de cette fenêtre.

De manière avantageuse, le miroir 34 est réalisé en polycarbonate avec dépôt d'un flash de métal sous vide et est fixé dans le passage 26 au moyen de clips ou par soudure thermique, ou par ultra-sons.

Comme on le constate, lorsque l'écran 16 est escamoté dans le logement 14, l'image formée sur la fenêtre de visualisation 32 est inversée par la réflexion de la partie prédéterminée 33 de l'écran sur le miroir 34.

Afin de visualiser dans le bon sens les informations affichées sur la partie prédéterminée 33 de l'écran, le dispositif d'affichage 12 comprend des moyens 35 de détection de la position de l'écran, par exemple un capteur de déplacement raccordé à l'écran ou un interrupteur prévu dans la paroi supérieure de la planche de bord.

Les moyens de détection 35 sont raccordés à des moyens 37 de commande de l'affichage de l'écran propres à inverser l'affichage de celui-ci lorsqu'il est dans la position escamotée, de sorte que l'image formée sur la fenêtre de visualisation 32 présente des informations affichées dans le bon sens.

Lorsque l'écran 16 est dans sa position active, l'ouverture d'entrée 28 est exposée, de sorte que de la poussière ou des salissures peuvent entrer dans le passage 26 et salir le miroir et la face intérieure de la fenêtre 32, diminuant ainsi la visibilité des informations affichées par cette fenêtre.

Par ailleurs, lorsque l'écran 16 est dans sa position active, la lumière émise par l'écran, une lumière baignant l'habitacle du véhicule ou autre, pénètre par l'ouverture 28 et est réfléchie par le miroir, de sorte que la fenêtre de visualisation 32 apparaît éclairée.

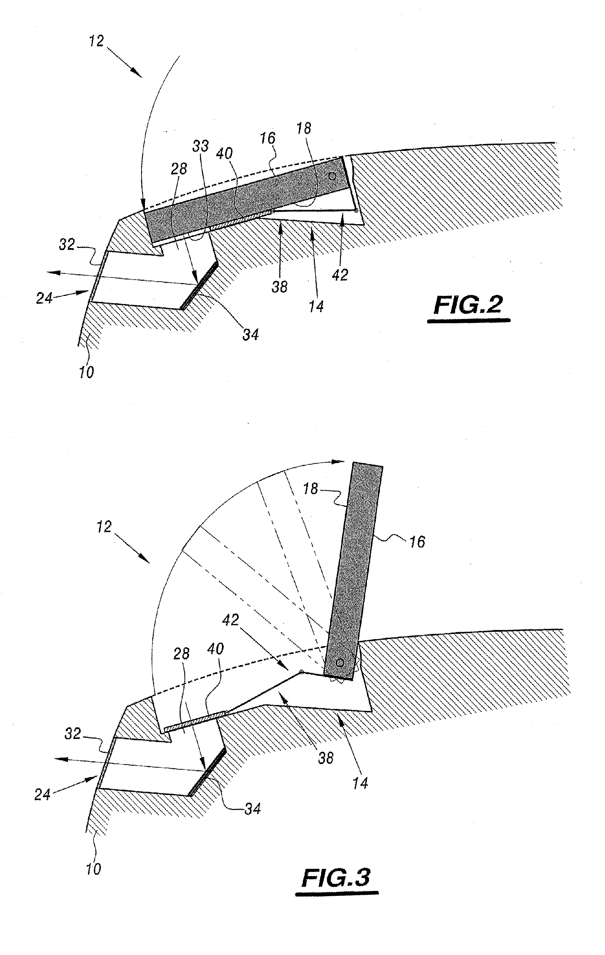

Les figures 2 et 3 sont des vues en coupe longitudinale du dispositif 12 décrit ci-dessus en relation avec la figure 1, modifié pour éviter ces inconvénients. Dans cette variante, il est prévu un obturateur 38 raccordé à l'écran 16 pour fermer l'ouverture 28 lorsque l'écran 16 est dans la position active et pour ouvrir ladite ouverture 28 lorsque l'écran est dans la position escamotée. Un tel obturateur empêche ainsi, à la fois, à des salissures ou de la poussière de se déposer sur le miroir 34 et sur la face intérieure de la fenêtre de visualisation 32, et à celle-ci d'être éclairée lorsque l'écran est dans la position active. De manière avantageuse, l'obturateur comprend un coulisseau 40 articulé par son bord avant à l'extrémité d'un ensemble bielle-manivelle 42 dont l'autre extrémité est fixée au bord inférieur de l'écran 14.

Lorsque l'écran est entraîné en rotation de la position escamotée, illustrée sur la figure 2, à la position active, illustrée sur la figure 3, le mouvement de rotation de celui-ci est transformé en mouvement rectiligne du coulisseau, d'une position dans laquelle il se trouve à l'écart de l'ouverture 28 à une position dans laquelle il obture cette ouverture 28.

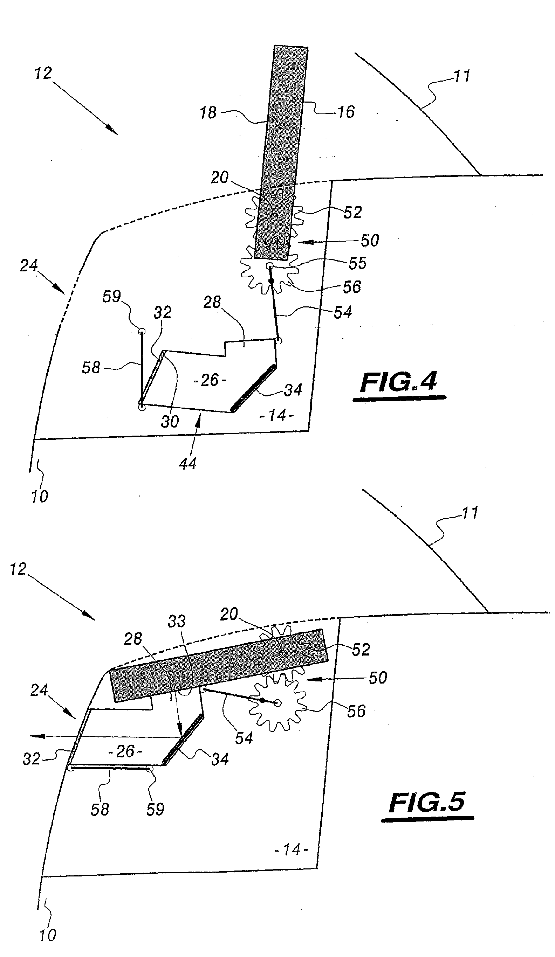

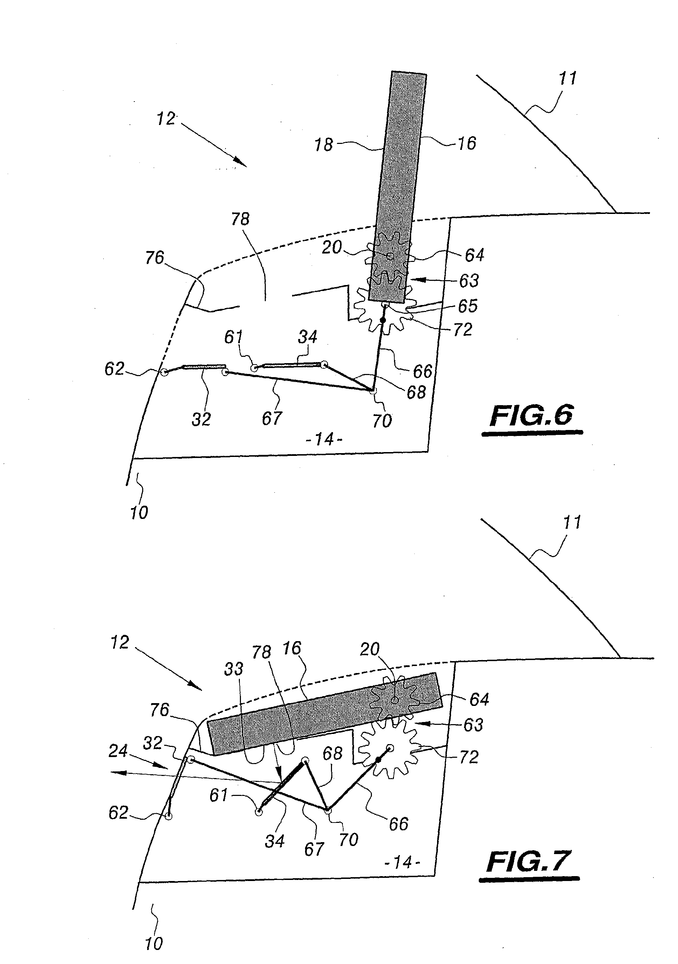

Un second mode de réalisation du dispositif selon invention est décrit ci-après en relation avec les figures 4 et 5. Ce second mode de réalisation est analogue à celui décrit en relation avec la figure 1 à la différence que l'ensemble passage 26-fenêtre 32 forme un boîtier rigide et mobile 44 dont les mouvements sont liés à ceux de l'écran.

Il est prévu, de chaque côté du plan vertical médian du dispositif, un engrenage 50 ayant une première roue dentée 52 fixée en son centre sur l'arbre 20, de sorte que la première roue 52 effectue des mouvements de rotation identiques à ceux de l'écran 16. Une première tige 54 est fixée par son extrémité supérieure à l'arbre 55 de la seconde roue dentée 56 de l'engrenage et par son autre extrémité au bord avant supérieur du boîtier rigide 44, qui est sensiblement confondu avec le bord avant de l'ouverture 28. Une seconde tige 58 est agencée de manière sensiblement parallèle à la première tige 54, et est articulée par son extrémité inférieure au bord inférieur de l'ouverture 30 et par son autre extrémité autour d'un axe transversal 59 solidaire de la planche de bord. Les tiges 54 et 58 formant ainsi un quasi-parallélogramme.

Le logement 14 est beaucoup plus profond que précédemment et contient le boîtier 44 en permettant les mouvements de celui-ci.

Lorsque l'écran est dans la position active, illustrée sur la figure 4, le boîtier 44 est escamoté dans le logement 14 dans une position de rangement dans laquelle la lumière entrant par l'ouverture 28 du boîtier, réfléchie par le miroir 34 et traversant la fenêtre de visualisation 32, ne traverse pas l'ouverture d'affichage 24 formée sur la paroi frontale de la planche de bord, de sorte que cette ouverture 24 n'apparaît pas comme éclairée.

Lorsque l'écran effectue un mouvement de rotation de la position active à la position escamotée, illustrée sur la figure 5, le système d'engrenage et de tiges 50, 54, 58 transforme le mouvement de rotation de l'écran en un mouvement de quasi-translation circulaire du boîtier 44, qui se déplace ainsi de la position escamotée dans le logement à une position dans laquelle la fenêtre de visualisation 32 recouvre l'ouverture d'affichage 24 et l'ouverture de délimitation 28 du boîtier se place en vis-à-vis de la partie prédéterminée 33 de l'écran et de façon adjacente à celle-ci. On retrouve alors la configuration escamotée de la figure 1.

Dans le mode de réalisation décrit ci-dessus, deux paires de tiges sont utilisées pour escamoter le boîtier 44 dans le logement 14. Il est possible également d'utiliser des tiges articulées supplémentaires afin, par exemple, de minimiser les jeux et/ou de répartir le poids du boîtier sur plus de quatre tiges. Si on le désire, un mécanisme approprié (non représenté) peut être prévu pour obturer/dégager l'ouverture 24 en synchronisme avec les mouvements de l'écran.

Un troisième mode de réalisation du dispositif selon invention est décrit ci-après en relation avec les figures 6 et 7. Ce mode de réalisation est analogue au mode de réalisation précédent à la différence que le miroir 34 et la fenêtre de visualisation 32 ne sont pas compris dans un boîtier rigide mais sont reliés à des moyens d'escamotage de ceux-ci propres à les escamoter dans le logement 14 lorsque l'écran 16 est dans la position active.

Le miroir 34 et la fenêtre de visualisation 32 sont chacun articulés au logement 14, par leur bord inférieur, sur des arbres respectifs 61, 62. Les moyens d'escamotage comprennent un engrenage 63 analogue à l'engrenage 50 des figures 4 et 5, de sorte que la première roue 64 de l'engrenage effectue des mouvements de rotation identiques à ceux de l'écran 16. Les moyens d'escamotage comprennent également une tringlerie formée d'une première, d'une seconde et d'une troisième tiges 66, 67, 68 articulées ensemble à l'une de leurs extrémités par un axe transversal 70.

La première tige 66 est fixée par l'autre de ses extrémités à l'arbre 65 de la seconde roue dentée 72. Les autres extrémités des seconde et troisième tiges 67, 68 sont articulées au bord supérieur du miroir 34 et de la fenêtre de visualisation 32 respectivement.

Lorsque l'écran 16 se déplace de la position active, illustrée sur la figure 6, à la position escamotée, illustrée sur la figure 7, le miroir 34 et la fenêtre de visualisation 32 effectuent un mouvement de rotation, autour de leurs axes d'articulation 61, 62 respectifs, d'une position d'escamotage dans le logement où ils sont en position sensiblement horizontale, à une position active dans laquelle la fenêtre 32 recouvre l'ouverture d'affichage 24 de la planche de bord, et le miroir 34 réfléchit la partie prédéterminée 33 de l'écran vers la fenêtre 32.

Il peut être également prévu dans ce mode de réalisation une paroi interne fixe 76 dans le logement 14, dans laquelle est formée une ouverture de délimitation 78 disposée en vis-à-vis et de manière adjacente à la partie prédéterminée 33 de l'écran lorsque celui-ci est dans la position escamotée.

Il peut être également prévu un obturateur, analogue à celui décrit précédemment en relation avec les figures 2 et 3, qui ferme l'ouverture de délimitation 78 de la paroi interne 76 du logement lorsque l'écran est dans la position active, et ouvre cette ouverture de délimitation lorsque l'écran est dans sa position escamotée.

Plusieurs formes de miroirs peuvent être prévues, à savoir un miroir 34 plan propre à former sur la fenêtre 32 une image de dimensions sensiblement égales à la partie prédéterminée 33 de l'écran, un miroir 34 convexe propre à former une image réduite de la partie prédéterminée de l'écran, de sorte que la résolution de l'image affichée sur la fenêtre 32 est accrue, ou un miroir 34 concave propre à former une image agrandie de la partie prédéterminée de l'écran, de sorte que la visibilité de l'information affichée est augmentée.

L'utilisation d'un miroir convexe est particulièrement avantageuse et permet, par exemple, d'utiliser une partie prédéterminée 33 de l'écran de grande surface et d'afficher une image de celle-ci de faibles dimensions et présentant une résolution importante dans la fenêtre de visualisation.

II vient d'être décrit un dispositif d'affichage pour véhicule automobile comprenant un logement prévu dans la planche de bord du véhicule automobile. Le logement du dispositif d'affichage objet de l'invention peut être également prévu dans le dossier du siège du conducteur ou du passager, ou en tout autre emplacement approprié pour permettre à des utilisateurs du véhicule automobile assis à l'arrière du véhicule d'utiliser les fonctionnalités multimédia susmentionnées.

## Revendications

1. Dispositif d'affichage (12) pour véhicule automobile, du type comprenant un logement (14), contenu dans un élément (10), notamment une planche de bord, du véhicule, et un écran d'affichage (16) déplaçable entre une position active dans laquelle sa face d'affichage (18) est visible complètement et une position escamotée dans le logement dans laquelle ladite face d'affichage (18) n'est pas visible directement, **caractérisé en ce qu'**il comprend :
- une ouverture d'affichage (24) formée dans une paroi dudit élément (10) pour visualiser une partie prédéterminée (33) de l'écran lorsque celui-ci est dans la position escamotée ; et
- des moyens de renvoi (34) agencés pour renvoyer l'image de ladite partie prédéterminée de l'écran vers l'ouverture d'affichage (24) lorsque l'écran est dans sa position escamotée.

2. Dispositif selon la revendication 1, **caractérisé en ce que** l'écran est articulé au logement (10) par des moyens d'articulation (20) et déplaçable par rotation autour de ceux-ci.

3. Dispositif selon la revendication 1 ou 2, **caractérisé en ce que** les moyens de renvoi (34) comprennent un système optique de renvoi, notamment un élément réfléchissant tel qu'un miroir plan, concave ou convexe.

4. Dispositif selon la revendication 3, **caractérisé en ce qu'**il comprend en outre, entre l'écran (16) et l'élément réfléchissant (34), des moyens (28 ; 78) de délimitation de la partie prédéterminée de l'écran lorsque l'écran (16) est dans la position escamotée.

5. Dispositif selon la revendication 1, 2, 3 ou 4, **caractérisé en ce qu'**il est prévu une fenêtre de visualisation (32) recouvrant l'ouverture d'affichage (24) au moins lorsque l'écran est dans la position escamotée.

6. Dispositif selon l'une quelconque des revendications 3 à 5, **caractérisé en ce que** l'élément réfléchissant (34) est disposé dans un passage (26) formé à l'intérieur dudit élément (10), les moyens de délimitation étant formés par une ouverture d'entrée (28) du passage (26) de dimensions sensiblement égales à la partie prédéterminée (33) de l'écran et agencée en vis-à-vis de et de manière adjacente à celle-ci lorsque l'écran est dans la position escamotée.

7. Dispositif selon la revendication 6, **caractérisé en ce qu'**il comprend un obturateur (38) relié à l'écran (16), adapté pour fermer l'ouverture d'entrée (28) du passage lorsque l'écran est dans la position active et dégager cette ouverture (28) lorsque l'écran est dans la position escamotée, l'obturateur (38) comprenant notamment un coulisseau (40) relié à l'écran (16) par un système bielle-manivelle (42).

8. Dispositif selon la revendication 6 ou 7, **caractérisé en ce que** le passage (26) est ménagé de façon fixe dans ledit élément (10).

9. Dispositif selon la revendication 6, **caractérisé en ce que** le passage (26) et la fenêtre de visualisation (32) forment un boîtier (44) rigide, et **en ce que** le boîtier (44) est mobile avec ses mouvements liés à ceux de l'écran (16).

10. Dispositif selon la revendication 9, **caractérisé en ce que** le boîtier (44) est articulé au logement (14) et à l'écran par un ensemble d'au moins une paire de tiges (54, 58) sensiblement parallèles et de longueur sensiblement égales, agencées de façon que lorsque l'écran (16) effectue une rotation de sa position active à sa position escamotée, le boîtier (44) effectue un mouvement de quasi-translation circulaire d'une position escamotée dans le logement (14) à une position dans laquelle sa fenêtre de visualisation (32) recouvre l'ouverture d'affichage (24) et l'ouverture d'entrée (28) est en vis-à-vis et adjacente à ladite partie prédéterminée (33) de l'écran.

11. Dispositif selon la revendication 5, **caractérisé en ce qu'**il est prévu des moyens (62, 64, 66, 68) d'escamotage des moyens de renvoi (34) et de la fenêtre de visualisation (32) propres à escamoter ceux-ci dans le logement (14) lorsque l'écran est dans sa position active.

12. Dispositif selon la revendication 11, **caractérisé en ce que** les moyens de renvoi (34) et la fenêtre de visualisation (32) sont chacun articulés au logement (14) par un bord (54, 56) par des moyens d'articulation (61, 62) et reliés chacun à l'écran par une tringlerie (64, 66, 68) agencée de façon que lorsque l'écran (16) effectue une rotation de sa position escamotée à sa position active, les moyens de renvoi (34) et la fenêtre de visualisation (32) effectuent un mouvement d'escamotage par rotation autour des moyens d'articulation (61, 62).

13. Dispositif selon l'une quelconque des revendications précédentes, **caractérisé en ce qu'**il comprend en outre des moyens (35) de détermination de la position de l'écran (16) et des moyens (37) de commande d'affichage raccordés auxdits moyens (35) de détermination et adaptés pour inverser l'affichage de l'écran lorsque celui-ci est dans sa position escamotée.
